# EUROPÄISCHE PATENTSCHRIFT

(11) **EP 0 747 245 B1**
(45) Veröffentlichungstag und Bekanntmachung des Hinweises auf die Patenterteilung: **24.03.1999**
(21) Anmeldenummer: 96106873.1
(22) Anmeldetag: 02.05.1996
(51) Int. Cl.: B60G 15/06

(54) **Stützlager für einen Stossdämpfer eines Kraftfahrzeuges**
Support for a motor vehicle shock absorber
Support pour un amortisseur d'un véhicule automobile

(30) Priorität: 09.06.1995 DE 19521128
(43) Veröffentlichungstag der Anmeldung: 11.12.1996
(73) Patentinhaber: DAIMLER-BENZ AKTIENGESELLSCHAFT, 70567 Stuttgart (DE)
(72) Erfinder: Dassler, Jürgen, 70188 Stuttgart (DE); Swinnen, Horst, 72649 Wolfsschlugen (DE)

(56) Entgegenhaltungen:
- FR-A- 1 194 397
- US-A- 4 681 304

## Beschreibung

Die Erfindung betrifft ein Stützlager für einen Stoßdämpfer mit gefedert gelagertem Dämpferzylinder eines Kraftfahrzeuges nach dem Oberbegriff des Patentanspruchs 1.

Ein solches Stützlager ist beispielsweise bekannt aus EP 0 065 235 A1. Bei einem solchen Stützlager hat die elastische Lagerung der Kolbenstange des Stoßdämpfers die Aufgabe, sogenannte Mikrobewegungen, die in dem Dämpferzylinder des Stoßdämpfers nicht gedämpft werden, zu dämpfen. Damit bei größeren Schwingungsausschlägen der eigentliche Stoßdämpfer zur Wirkung kommen kann, muß der durch die elastische Lagerung der Kolbenstange für Mikrobewegungen gegebene Schwingweg eng begrenzt sein. Diese Begrenzung erfolgt über Anschläge in beide Richtungen der Schwingbewegung. Diese Anschläge müssen elastisch ausgebildet sein, um Anschlaggeräusche und den Fahrkomfort störende Aufschlagimpulse zu vermeiden.

Das gattungsgemäße Stützlager umfaßt auch einen Bereich, in dem der Dämpferzylinder des Stoßdämpfers in Stoßdämpferrichtung direkt gegenüber der Aufnahme des Stützlagers gelagert ist. Die vorgenannte Aufnahme ist in der Regel die Karosserie des Fahrzeuges. Der den Dämpferzylinder aufnehmende Teil des Stützlagers ist hier ein drehbar gegenüber der Karosserie gelagerter Federteller. Zwischen diesem Federteller und dem Dämpferzylinder ist eine Schraubenfeder gespannt, die ein Teil der Fahrzeugfederung ist. Um zu hohe Einfederungen des mit dem Dämpferzylinder verbundenen Rades eines Fahrzeuges zu vermeiden, ist an dem Federteller ein elastischer Anschlag vorgesehen, der den Einfederungsweg des Dämpferzylinders begrenzt. In dem Oberbegriff des Patentanspruchs ist dies der zweite elastische Anschlag.

Bei einem vorstehend beschriebenen gattungsgemäßen Stützlager beschäftigt sich die Erfindung mit dem Problem, eine rationell herstellbare Verbindung des ersten und zweiten elastischen Anschlages an den Federteller zu schaffen. Ferner soll das Verformungsverhalten der beiden Anschläge unabhängig voneinander den jeweiligen Anforderungen entsprechend eingestellt werden.

Eine Lösung hierzu zeigt die Ausführung nach den kennzeichnenden Merkmalen des Patentanspruchs auf.

Ein wesentlicher Vorteil der Erfindung besteht darin, daß der erste elastische Anschlag materialmäßig auf die an ihn gestellten Anforderungen ausgelegt werden kann. Diese Anforderungen bestehen darin, daß dieser Anschlag eine elastisch weiche Anfangsverformung mit progressiv ansteigender Steifigkeit bei einem insgesamt möglichst eng begrenzten Verformungsweg ermöglicht. Ein kurzer Verformungsweg ist notwendig, um die elastische Lagerung der Kolbenstange in der Fahrzeugkarosserie festigkeitsmäßig nicht zu gefährden.

In der Ausführung des ersten elastischen Anschlags als Ringteil mit einem hinterschnittartig angeformten Kragen kann dieser Kragen speziell für ein Einknöpfen in eine zentrale Öffnung des diesen elastischen ersten Anschlag aufnehmenden Federtellers ausgelegt werden. Hierzu eignet sich insbesondere eine zu dem freien Ende des Kragens konisch auslaufende Form. An den zur Befestigung des ersten Anschlages durch die zentrale Öffnung des Federtellers hindurchgeführten Kragen kann der in der Form eines Hohlzylinders ausgeführte zweite elastische Anschlag in einfacher Weise über eine entsprechend eingeformte Rille aufgeschnappt werden. Durch eine solche gegenseitige Verbindung zwischen dem ersten und zweiten elastischen Anschlag ist eine äußerst einfache Befestigung dieser beiden Teile an dem Federteller möglich.

Materialmäßig kann der zweite elastische Anschlag ebenso wie der erste elastische Anschlag auf die speziell an diesen gestellten Anforderungen ausgerichtet werden. Dies bedeutet, daß der zweite elastische Anschlag aus einem gegenüber dem Material des ersten elastischen Anschlages höher elastischem Material bestehen kann, das insbesondere auch stärker kompressibel ist als das Material des ersten elastischen Anschlages.

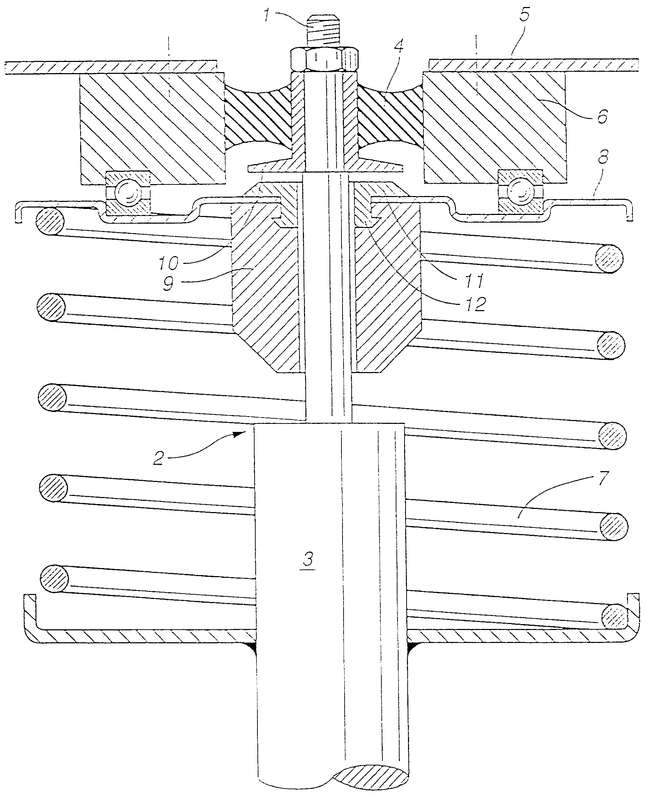

Ein Ausführungsbeispiel der Erfindung ist in der Zeichnung dargestellt.

Diese zeigt
ein Stützlager für einen Stoßdämpfer im Schnitt.

Die Kolbenstange 1 eines Stoßdämpfers 2 mit einem Dämpferzylinder 3 ist in einem elastischen Lager 4 an der Karosserie 5 eines Fahrzeuges über ein Aufnahmeteil 6 gelagert.

Der Dämpferzylinder 3 stützt sich gegen das Aufnahmeteil 6 über eine Schraubenfeder 7 ab, wobei diese Schraubenfeder karosserieseitig auf einem drehbar gegenüber dem Aufnahmeteil 6 gelagerten Federteller 8 aufliegt. Ein Anschlagpuffer, der hier als zweiter elastischer Anschlag 9 bezeichnet wird, dient dazu, ein zu großes Einfedern eines mit dem Dämpferzylinder 3 in Verbindung stehenden Rades eines Kraftfahrzeuges zu verhindern. Diese Verhinderung erfolgt dadurch, daß der Einfederungsweg des Dämpferzylinders 3 durch den zweiten elastischen Anschlag 9, aufgrund seines progressiven Kraftaufbaus über den Einfederweg begrenzt ist.

Die elastische Lagerung der Kolbenstange 1 hat den Zweck, von dem Stoßdämpfer 2 innerhalb des Dämpferzylinders 3 nicht abfangbare Mikrobewegungen zu dämpfen. Über Mikrobewegungen hinausgehende Schwingungen sind dagegen von dem Stoßdämpfer 2 aufzunehmen. Daher ist die Schwingungsamplitude der elastischen Lagerung 4 der Kolbenstange 1 eng zu begrenzen. Um diese Begrenzung zu erreichen, ist das elastische Lager 4 mit einem in Wirkverbindung mit diesem elastischen Lager 4 stehenhen starren Anschlag 10 versehen. Bei einem Einfedern, d.h. bei einer Schwingbewegung der Kolbenstange 1 von dem Dämpferzylinder 3 zum elastischen Lager 4 hin schlägt der starre Anschlag 10 an den elastischen Bereich des elastischen Lagers 4 an und begrenzt so dessen Auslenkweg in Einfederungsrichtung.

Eine Ausschlagbegrenzung des elastischen Lagers 4 beim Ausfedern, d.h. bei einer Bewegung der Kolbenstange 1 in Richtung auf den Dämpferzylinder 3, schlägt der starre Anschlag 10 an einen ersten elastischen Anschlag 11 an. Dieser erste elastische Anschlag 11 ist aus einem Material mit einem weichen Anfangsverformungsgrad, das mit zumnehmendem Verformungsweg stark progressiv härter wird und das insgesamt nur einen relativ geringen Verformungsweg ermöglicht. Diese Eigenschaften des Materials des ersten Anschlages 11 sind für eine gute Funktionsfähigkeit erforderlich. Die Erklärung hierfür wurde bereits weiter oben gegeben.

Der oberhalb des Federtellers 8 angeordnete Bereich des ersten elastischen Anschlags 11, der bei einem Aufschlag des starren Anschlages 10 verformt wird, ist zweckmäßigerweise als möglichst flache an dem Federteller 8 anliegende Scheibe ausgebildet. An diesem flachen Bereich ist ein mit einer hinterschnittartig verlaufenden Rille angrenzender Kragen 12 angeformt. Dieser Kragen kann an seinem freien Ende über eine relativ große Länge konisch auslaufen, um dadurch ein einfaches Einknöpfen dieses Kragens in den Federteller 8 zu ermöglichen. Selbstverständlich kann die dem starren Anschlag 10 zugewandte Seite des ersten elastischen Anschlags 11 in weiterer Ausgestaltung der Erfindung auch eine gewölbte oder konturierte Oberfläche aufweisen.

Der in Form eines Hohlzylinders ausgebildete zweite elastische Anschlag 9 besitzt radial innen an seinem dem Federteller 8 zugewandten Ende eine hinterschnittartig eingeformte Rille, mit der dieses Teil auf den Kragen 12 des ersten elastischen Anschlages 11 aufschnappbar ist. Durch den konischen Auslauf des Kragens 12 des ersten elastischen Anschlages 11 ist auch die Schnappverbindung zwischen den beiden elastischen Anschlägen (11,9) montagemäßig leicht ausführbar.

Durch die Auftrennung der beiden elastischen Anschläge (11,9) kann auch der zweite elastische Anschlag 9 aus dem hierfür funktionsmäßig am besten geeigneten Material hergestellt werden.

## Patentansprüche

1. Stützlager für einen Stoßdämpfer mit gefedert gelagertem Dämpferzylinder eines Kraftfahrzeuges, in dem die Kolbenstange des Stoßdämpfers elastisch an der Fahrzeugkarosserie gelagert ist und einen in Richtung der Achse des Dämpferzylinders weisenden starren Anschlag besitzt, der gegen einen ersten elastischen Anschlag an einer ersten Seite eines die Feder des Dämpferzylinders aufnehmenden und in Richtung der Stoßdämpferachse starr abstützenden Federtellers anschlagbar ist, und bei dem an der der ersten Seite gegenüberliegenden zweite Seite des Federtellers ein zweiter elastischer Anschlag für eine Einfederungs-Wegbegrenzung des Dämpferzylinders vorgesehen ist,
**dadurch gekennzeichnet**,
daß der erste Anschlag (11) ein in eine zentrale Öffnung des Federtellers (8) einknöpfbares Ringteil mit einem durch den Federteller (8) hindurchführbaren radial außen einen ringförmigen Hinterschnitt aufweisender Ring-Kragen (12) ist, auf den der zweite elastische Anschlag (9) aufschnappbar ist.

## Claims

1. Supporting mount for a shock damper with a spring-mounted damper cylinder of a motor vehicle, in which the piston rod of the shock damper is mounted elastically on the vehicle body and has a rigid stop which points in the direction of the axis of the damper cylinder and can be knocked against a first elastic stop on a first side of a spring plate which receives the spring of the damper cylinder and is supported rigidly in the direction of the axis of the shock damper, and in which, on the second side of the spring plate opposite the first side, a second elastic stop is provided to limit the rebound path of the damper cylinder, characterized in that the first stop (11) is an annular part, which can be snapped into a central opening in the spring plate (8), with an annular collar (12) which can be passed through the spring plate (8), has an annular undercut on the radially outer side, and onto which the second elastic stop (9) can be snapped.

## Revendications

1. Support pour un amortisseur d'un véhicule automobile, amortisseur comprenant un cylindre d'amortisseur monté sur ressort, support dans lequel la tige de piston de l'amortisseur est montée élastiquement sur la carrosserie du véhicule et possède une butée rigide qui est tournée dans la direction de l'axe du cylindre de l'amortisseur et qui peut buter contre une première butée élastique située sur un premier côté d'une coupelle de ressort supportant le ressort du cylindre de l'amortisseur et assurant un appui rigide dans la direction de l'axe de l'amortisseur, et dans lequel une deuxième butée élastique, destinée à une limitation de la course de contraction du ressort du cylindre de l'armotisseur, est prévue sur le deuxième côté de la coupelle du ressort qui est opposé au premier côté,
caractérisé
en ce que la première butée (11) est une pièce annulaire qui peut être boutonnée dans un trou central de la coupelle de ressort (8) et qui comporte un collet annulaire (12) qui peut être amené à passer à travers la coupelle de ressort (8), présente radialement vers l'extérieur une contre-dépouille annulaire et sur lequel la deuxième butée élastique (9) peut être enclenchée.
